# FASCICULE DE BREVET EUROPEEN

(11) **EP 3 126 875 B1**
(45) Date de publication et mention de la délivrance du brevet: **21.03.2018**
(21) Numéro de dépôt: 15709720.5
(22) Date de dépôt: 17.02.2015
(51) Int. Cl.: G01T 1/12

(54) **DETECTEUR DE RAYONS X ET SON PROCEDE DE FABRICATION**
RÖNTGENDETEKTOR UND VERFAHREN ZU DESSEN HERSTELLUNG
X-RAY DETECTOR AND METHOD FOR ITS PRODUCTION

(30) Priorité: 03.04.2014 FR 1452974
(43) Date de publication de la demande: 08.02.2017
(73) Titulaire: Commissariat à l'Énergie Atomique et aux Énergies Alternatives, 75015 Paris (FR)
(72) Inventeur: ALIANE, Abdelkader, F-38100 Grenoble (FR)
(74) Mandataire: Thibon, Laurent
(86) Numéro de dépôt international: PCT/FR2015/050388
(87) Numéro de publication internationale: WO 2015/150649

(56) Documents cités:
- WO-A1-2014/029930
- BRUIJN M P ET AL: "Advances in Fabrication of TES Î 1/4 -Calorimeter Arrays and Associated Filter Structures for AC-Biased Read Out", JOURNAL OF LOW TEMPERATURE PHYSICS, KLUWER ACADEMIC PUBLISHERS-CONSULTANTS BUREAU, NE, vol. 151, no. 1-2, 17 janvier 2008 (2008-01-17), pages 500-505, XP019576665, ISSN: 1573-7357
- GONCALVES L M ET AL: "Flexible X-Ray Detector Based on the Seebeck Effect", INDUSTRIAL ELECTRONICS, 2007. ISIE 2007. IEEE INTERNATIONAL SYMPOSIUM ON, IEEE, PI, 1 juin 2007 (2007-06-01), pages 1525-1529, XP031156365, ISBN: 978-1-4244-0754-5 cité dans la demande

## Description

La présente demande de brevet revendique la priorité de la demande de brevet français FR14/52974.

### Domaine de l'invention

La présente demande concerne un détecteur de rayons X et un procédé de fabrication d'un détecteur de rayons X.

### Exposé de l'art antérieur

Il existe plusieurs types de détecteurs de rayons X. Les détecteurs de rayons X dits à détection directe mettent en oeuvre des photodiodes à jonction PN ou des photoconducteurs adaptés à convertir directement le rayonnement X en un signal électrique mesurable. Les détecteurs de rayons X dits à détection indirecte mettent en oeuvre une conversion du rayonnement X en un autre signal qui est à son tour converti en un signal électrique mesurable.

Un exemple de détecteur de rayons X à détection indirecte comprend les scintillateurs qui convertissent le rayonnement X en un rayonnement à une longueur d'onde différente, par exemple dans le domaine visible. Le signal lumineux visible est détecté par des photodétecteurs qui le transforment en un signal électrique mesurable. Le document "Flexible X-Ray Detector Based On the Seebeck Effect" de L. M. Goncalves, J. G. Rocha et S. Lanceros-Mendez (IEEE, 2007, pages 1525-1529) décrit un détecteur de rayons X du type bolomètre mettant en oeuvre un procédé de détection indirecte dans lequel le rayonnement X est transformé en chaleur dans des plots de cuivre et l'élévation de la température est mesurée par un capteur de température prévu dans le support du plot de cuivre. Le procédé de fabrication d'un tel détecteur de rayons X comprend la fixation de chaque plot de cuivre sur le support.

Un inconvénient d'un tel détecteur de rayons X est que son procédé de fabrication est difficile à mettre en oeuvre à bas coût pour la réalisation d'une matrice de pixels.

La publication de M.P. Bruijn et al "Advances in Fabrication of TES µ-Calorimeter Arrays and Associated Filter Structures for AC-Biased Read Out" (Journal of low Temperature Physics (2008), vol. 151, pages 500-505) décrit un détecteur de rayon X.

### Résumé

Un objet d'un mode de réalisation d'un détecteur de rayons X est de palier tout ou partie des inconvénients des détecteurs de rayons X et de leurs procédés de fabrication décrits précédemment.

Un autre objet d'un mode de réalisation est que le détecteur de rayons X peut être fabriqué à bas coût.

Un autre objet d'un mode de réalisation est que le détecteur de rayons X peut avoir une structure matricielle.

Un autre objet d'un mode de réalisation est que le détecteur de rayons X peut être réalisé par des techniques d'impression.

Un autre objet d'un mode de réalisation est que le détecteur de rayons X peut être réalisé sur un substrat flexible.

Ainsi, un mode de réalisation prévoit un détecteur de rayons X, comprenant un substrat comprenant des première et deuxième faces opposées, au moins un premier capteur de température du côté de la première ou de la deuxième face et au moins un empilement d'une couche d'oxyde de cuivre et d'une couche de cuivre, la couche d'oxyde de cuivre étant située entre la couche de cuivre et le substrat, l'empilement recouvrant au moins en partie le premier capteur de température ou étant au moins partiellement en vis-à-vis du premier capteur de température.

Selon un mode de réalisation, l'épaisseur de la couche de cuivre est comprise entre 5 µm et 60 µm.

Selon un mode de réalisation, l'épaisseur de la couche d'oxyde de cuivre est comprise entre 100 nm et 1 µm.

Selon un mode de réalisation, le premier capteur de température repose sur la première face et la couche d'oxyde de cuivre recouvre le premier capteur de température.

Selon un mode de réalisation, le détecteur comprend, en outre, un deuxième capteur de température reposant sur la deuxième face et au moins partiellement en vis-à-vis du premier capteur de température.

Selon un mode de réalisation, le détecteur comprend une enceinte déformable, entre l'empilement et le premier capteur de température, l'enceinte contenant des molécules thermo-réactives adaptées à déformer l'enceinte lorsque la température dépasse une température seuil.

Selon un mode de réalisation, le substrat comprend un film souple d'un matériau cristallin ou semi-cristallin comprenant une zone recouverte au moins partiellement par le premier capteur de température, et entourée d'un mur amorphisé.

Un mode de réalisation prévoit également un procédé de fabrication d'un détecteur de rayons X tel que défini précédemment, comprenant les étapes suivantes :
prévoir un substrat comprenant des première et deuxième faces opposées ;
former au moins un premier capteur de température du côté de la première ou deuxième face ;
déposer un plot en oxyde de cuivre recouvrant au moins en partie le premier capteur de température ou étant au moins partiellement en vis-à-vis du premier capteur de température ; et
irradier le plot d'oxyde de cuivre par un rayonnement ultraviolet de façon à former, dans le plot, un empilement d'une couche d'oxyde de cuivre et d'une couche de cuivre, la couche d'oxyde de cuivre étant située entre la couche de cuivre et le substrat.

Selon un mode de réalisation, le rayonnement ultraviolet est appliqué par impulsions, chaque impulsion ayant une durée comprise entre 500 µs et 3 ms, avec une fluence comprise entre 10 J/cm² et 30 J/cm².

Selon un mode de réalisation, le premier capteur de température est formé par des techniques d'impression.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe, partielle et schématique, d'un mode de réalisation d'un détecteur de rayons X ;
la figure 2 représente une courbe d'évolution de la transmission d'un rayonnement X dans une couche de cuivre en fonction de l'énergie des photons ;
la figure 3 représente une courbe d'évolution de la longueur d'atténuation d'un rayonnement X dans une couche de cuivre en fonction de l'énergie des photons ;
la figure 4 est une vue de dessus, partielle et schématique, d'un mode de réalisation d'un capteur de température ;
les figures 5A à 5F sont des vues en coupe, partielles et schématiques, de structures obtenues à des étapes successives d'un mode de réalisation d'un procédé de fabrication du détecteur de rayons X de la figure 1 ;
les figures 6 et 7 sont des vues en coupe, partielles et schématiques, d'un autre mode de réalisation d'un détecteur de rayons X dans deux configurations de fonctionnement ; et
la figure 8 est une vue en coupe, partielle et schématique, d'un autre mode de réalisation d'un détecteur de rayons X.

### Description détaillée

Par souci de clarté, de mêmes éléments ont été désignés par de mêmes références aux différentes figures et, de plus, les diverses figures ne sont pas tracées à l'échelle. Dans la suite de la description, sauf indication contraire, les termes "sensiblement", "environ" et "de l'ordre de" signifient "à 10 % près". En outre, seuls les éléments utiles à la compréhension de la présente description ont été représentés et sont décrits. En particulier, les traitements des signaux fournis par les capteurs de température sont bien connus de l'homme du métier et ne sont pas décrits davantage.

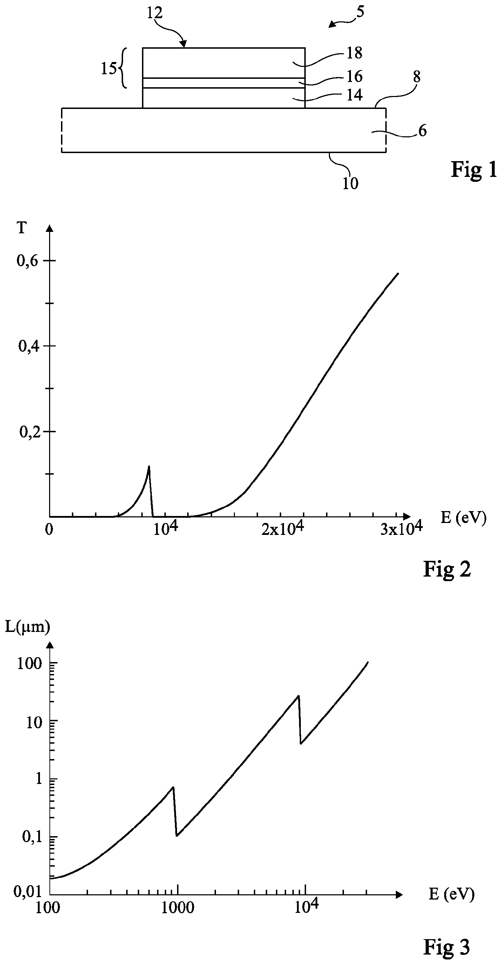

La figure 1 représente un mode de réalisation d'un détecteur 5 de rayons X. Le détecteur 5 comprend un substrat 6 ayant deux faces opposées 8, 10. Le détecteur 5 comprend, en outre, au moins un détecteur de rayons X élémentaire 12 formé sur la face 8 du substrat 6. De préférence, plusieurs détecteurs élémentaires 12 de rayons X sont formés sur la face 8 et/ou sur la face 10 du substrat 6, par exemple selon une matrice de détecteurs élémentaires.

Le détecteur élémentaire 12 comprend un capteur de température 14 reposant sur le substrat 6 et un empilement 15 recouvrant le capteur de température 14. L'empilement 15 comprend une couche d'interface 16 recouvrant le capteur de température 14 et une couche 18 d'absorption de rayons X, également appelée plot d'absorption, recouvrant la couche d'interface 16.

L'épaisseur du substrat 6 peut être comprise entre et 5 µm et 200 µm. Le substrat 6 peut être un substrat rigide ou un substrat flexible. Un exemple de substrat rigide comprend un substrat en silicium, en germanium ou en verre. Un exemple de substrat flexible comprend un film en PEN (polyéthylène naphtalate), PET (polyéthylène téréphtalate), PI (polyimide) ou PEEK (polyétheréthercétone). De préférence, le substrat 6 est un film flexible. Le substrat 6 peut avoir une épaisseur de 10 µm à 300 µm et présenter un comportement flexible, c'est-à-dire que le substrat 6 peut, sous l'action d'une force extérieure, se déformer, notamment se plier, sans se casser ou se déchirer.

Le rôle de la couche d'absorption 18 est d'absorber le rayonnement X, ce qui conduit à une élévation de la température de la couche 18. Selon un mode de réalisation, la couche 18 est en cuivre et, comme cela est décrit plus en détail par la suite, a été obtenue à partir d'une couche d'oxyde de cuivre (CuO) exposée à un recuit par ultraviolet à impulsions ultra brèves. L'épaisseur de la couche de cuivre 18 peut être comprise entre 5 µm et 60 µm. L'utilisation d'une couche d'absorption 18 en cuivre permet la détection de rayons X ayant une énergie entre 100 eV et 30 keV.

La figure 2 représente une courbe d'évolution de la transmission d'un rayonnement X en fonction de l'énergie du rayonnement dans une couche de cuivre ayant une épaisseur de 60 µm.

La figure 3 représente une courbe d'évolution de la longueur d'atténuation d'un rayonnement X en fonction de l'énergie du rayonnement dans une couche de cuivre.

Les figures 2 et 3 montrent que l'utilisation d'une couche d'absorption 18 en cuivre ayant une épaisseur comprise entre 5 µm et 60 µm permet la détection de rayons X ayant une énergie entre 100 eV et 30 keV.

Le rôle de la couche d'interface 16 est d'isoler électriquement la couche d'absorption 18 du capteur de température 14 tout en permettant le transfert de chaleur de la couche d'absorption 18 vers le capteur de température 14. Selon un mode de réalisation, au moins une partie de la couche d'interface 16 est en oxyde de cuivre (CuO). L'épaisseur de la couche d'oxyde de cuivre 16 peut être comprise entre 100 nm et 5 µm, de préférence entre 100 nm et 1 µm.

Le rôle du capteur de température 14 est de fournir un signal électrique représentatif de l'élévation de température mesurée. Le capteur de température 14 peut être de tout type. Selon un mode de réalisation, il s'agit d'un capteur de température de type résistif. Dans ce cas, le capteur comprend une ou plusieurs résistances sensibles à la température. A titre d'exemple, ces résistances peuvent être montées selon un pont de Wheatstone ou selon un montage diviseur de tension.

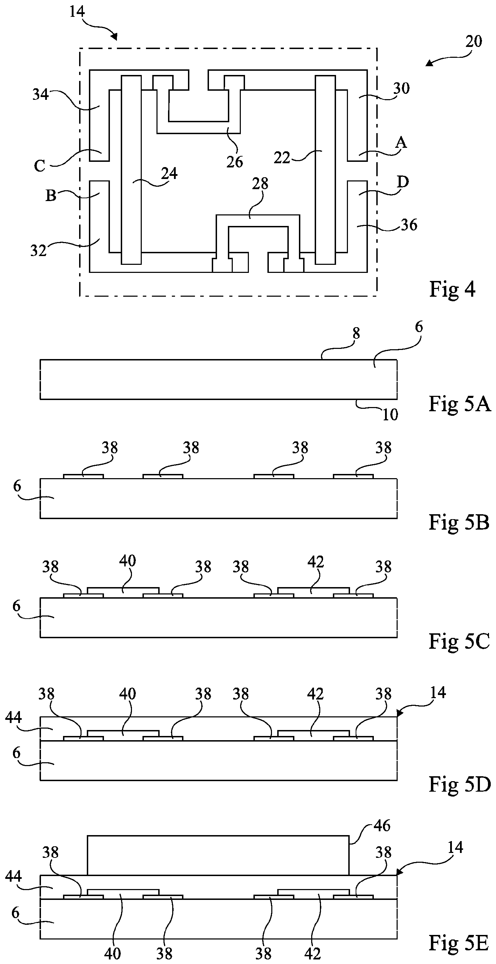

La figure 4 est une vue de dessus d'un mode de réalisation du capteur de température 14 comprenant des résistances sensibles à la température formées par des cordons de pâtes résistives. Il peut être utilisé des pâtes résistives à coefficient de température négatif, couramment désignées par le sigle NTC (de l'anglais Negative Temperature Coefficient). Des résistances NTC sont par exemple à base d'un oxyde métallique tel que de l'oxyde d'étain dopé à l'antimoine de formule chimique Sb₂O₅SnO₂, également appelé ATO. D'autres types de résistances NTC peuvent être utilisés, par exemple des encres à nanocristaux de silicium ou de germanium ou des pâtes à base de graphène. Il peut être utilisé des pâtes résistives thermosensibles à coefficient de température positif, couramment désignées par le sigle PTC (de l'anglais Positive Temperature Coefficient). Des résistances PTC sont couramment à base de noir de carbone. Dans une résistance PTC, la valeur de la résistance électrique augmente quand la température augmente. Dans une résistance NTC, la valeur de la résistance électrique diminue quand la température augmente. Les résistances peuvent être réalisées par des techniques de sérigraphie ou d'impression par jet, dans lesquelles une encre est déposée sur le substrat 6.

Selon un mode de réalisation, un polymère est ajouté à une encre classique pour résistance NTC ou PTC, par exemple une encre à base de Sb₂O₅SnO₂ pour l'encre NTC et une encre à base de noir de carbone pour l'encre PTC. Le polymère a une constante diélectrique comprise entre 2 et 3, une masse molaire (caractérisant la longueur de chaine) comprise entre 50000 g/mol et 150000 g/mol, et une température de transition vitreuse Tg comprise entre 40°C et 100°C. Ce polymère est, par exemple, choisi parmi le groupe comprenant les polymères styréniques et les polymères fluorés, notamment le perfluorotributylamine.

Selon un mode de réalisation, le capteur de température 14 a une structure de pont de Wheatstone 20 et comprend deux bornes d'entrée A et B entre lesquelles est appliquée une tension d'alimentation et deux bornes de sortie C et D entre lesquelles est mesurée une tension représentative de la température. Le pont de Wheatstone 20 comprend deux résistances PTC 22, 24 et deux résistances NTC 26, 28 et quatre pistes conductrices 30, 32, 34 et 36. Une extrémité de la résistance PTC 22 est reliée à la borne A par la piste conductrice 30 et l'autre extrémité de la résistance PTC 22 est reliée à la borne D par la piste conductrice 36. Une extrémité de la résistance PTC 24 est reliée à la borne B par la piste conductrice 32 et l'autre extrémité de la résistance PTC 24 est reliée à la borne C par la piste conductrice 34. Une extrémité de la résistance NTC 26 est reliée à la borne A par la piste conductrice 30 et l'autre extrémité de la résistance NTC 26 est reliée à la borne C par la piste conductrice 34. Une extrémité de la résistance NTC 28 est reliée à la borne B par la piste conductrice 32 et l'autre extrémité de la résistance NTC 28 est reliée à la borne D par la piste conductrice 36.

A titre d'exemple, le capteur de température 14 est adapté à la détection de températures variant de 15°C à 120°C avec une forte sensibilité. A titre d'exemple, avec une alimentation en tension du pont de Wheatstone à 4,8 V, les inventeurs ont obtenu une sensibilité comprise entre 0,06 à 0,1 Volt/degré Celsius. Ceci est nécessaire, car les températures issues de l'absorption des rayons X sont très faibles. Il faut donc une forte sensibilité pour pouvoir détecter ces faibles températures.

Les figures 5A à 5F illustrent un mode de réalisation d'un procédé de fabrication du détecteur 5 représenté en figure 1 comprenant les étapes suivantes :
(1) On prépare le substrat 6, par exemple un film de PEN ou de PET (figure 5A). L'épaisseur du substrat 6 peut être de 50 à 300 µm, par exemple de 125 µm. Une faible épaisseur favorise la dynamique de transfert de la chaleur dans le détecteur.
(2) Des électrodes 38 formant les contacts électriques et les pistes conductrices du capteur de température sont déposées et gravées (figure 5B). Les électrodes 38 correspondent, par exemple, aux pistes conductrices 30, 32, 34, 36 du mode de réalisation du capteur de température 14 représenté en figure 4. Ces électrodes 38 peuvent être en or (Au), en cuivre (Cu), en argent (Ag), en titane (Ti) ou en polymère conducteur, par exemple du poly(3,4-éthylènedioxythiophène) : poly(styrène sulfonate), également appelé PEDOT : PSS. Lorsque les électrodes 38 sont métalliques, elles peuvent être déposées par dépôt physique en phase vapeur (PVD). Lorsque les électrodes 38 sont en argent, en cuivre ou en polymère conducteur, elles peuvent être déposées par sérigraphie ou par jet d'encre.
   L'étape (2) peut être suivie d'un traitement sous plasma d'oxygène, par exemple avec un débit de 50 sccm et une puissance de 80 W pendant 60 secondes, pour éliminer les résidus sur la surface et améliorer l'adhérence des pâtes résistives sensibles à la température. Un traitement UV/O₃ du substrat (ultraviolet/ozone), par exemple pendant 3 à 5 minutes peut également être mis en oeuvre.
(3) Des portions 40, 42 de pâtes résistives sensibles à la température, éventuellement dopées en polymère, sont déposées (figure 5C). Selon un mode de réalisation, il s'agit de portions d'une pâte résistive de même nature, NTC ou PTC. Selon un autre mode de réalisation, il s'agit de portions de pâtes résistives NTC et PTC. Dans ce cas, les portions de pâte résistive PTC sont formées après les portions de pâte résistive NTC ou, inversement, les portions de pâte résistive NTC sont formées après les portions de pâte résistive PTC. Les portions 40, 42 de pâtes résistives correspondent, par exemple, aux résistances 22, 24, 26, 28 du mode de réalisation du capteur de température 14 représenté en figure 4. Les portions 40, 42 sont, par exemple, au contact de certaines pistes électriques 38.

Chaque dépôt peut être effectué par sérigraphie ou par impression à jet d'encre. L'épaisseur des portions 40, 42 déposées peut être de 5 µm à 15 µm, par exemple 10 µm.

Selon un mode de réalisation, une encre NTC utilisée pour former une résistance NTC peut comprendre une solution d'encre ATO (Sb₂O₅SnO₂) et d'un polymère (P) tel que défini précédemment.

Le procédé de préparation de l'encre NTC est, à titre d'exemple, le suivant. On prépare une solution du polymère. Le polymère isolant peut être dissous dans un solvant ayant une température d'évaporation comprise entre 100 et 170°C, par exemple du toluène (température d'évaporation de 110°C), du butyl acétate (température d'évaporation de 118°C) pour les polymères styréniques ou du perfluorotributylamine (FC43, température d'évaporation de 165°C) pour les polymères fluorés, avec les pourcentages suivants par rapport au poids total de la solution de polymère : de 15 % à 30 % en poids, par exemple 25 %, du polymère et de 85 % à 70 % en poids, par exemple 75 %, du solvant.

La solution d'encre ATO peut comprendre l'un des solvants suivants : cyclopentanone, acétate d'éthlyle, tétra-hydrofurane, 3-hexanone, 2-pentanone ou acétone. La solution d'encre ATO peut comprendre de 20 % à 80 % en poids d'ATO et de 20 % à 80 % en poids de solvant.

La solution de polymère obtenue est mélangée à la solution d'encre ATO (Sb₂O₅SnO₂) avec des proportions en poids inférieures à 30 %, de préférence de 10 % à 30 % par rapport au poids total de la solution obtenue contenant le polymère et l'ATO. La solution obtenue comprenant le polymère et l'ATO est ensuite agitée pendant 10 à 30 minutes à température ambiante. Les proportions utilisées pour la fabrication du mélange sont adaptées en viscosité pour un dépôt par sérigraphie.

Selon un mode de réalisation, une encre PTC utilisée pour former une résistance PTC peut comprendre une solution de noir de carbone et d'un polymère (P) tel que défini précédemment.

Le procédé de préparation de l'encre PTC est le suivant. On prépare une solution du polymère comme cela a été décrit précédemment pour la préparation de l'encre PTC.

La solution de noir de carbone peut comprendre comme solvant le cyclopentanone, le dibutyl carbitol, ou l'éthylène glycol diacétate. La solution de noir de carbone peut comprendre de 40 % à 90 % en poids de noir de carbone et de 10 % à 60 % en poids de solvant.

La solution de polymère obtenue est mélangée avec la solution de noir de carbone avec des proportions en poids inférieures à 30 %, de préférence de 10 % à 30 % par rapport au poids total de la solution obtenue contenant le polymère et le noir de carbone. La solution obtenue comprenant le polymère et le noir de carbone est ensuite agitée pendant 10 à 30 minutes à température ambiante. Les proportions utilisées pour la fabrication du mélange sont adaptées en viscosité pour un dépôt par sérigraphie.

L'étape de dépôt de l'encre NTC ou PTC peut être suivie d'une étape de séchage pour faire évaporer tous les solvants de la solution de polymère et d'encre ATO et/ou de la solution de polymère et de noir de carbone. A titre d'exemple, l'étape de séchage peut être réalisée à 130°C pendant 15 à 30 minutes (de préférence pendant 30 minutes).

Après séchage, l'encre NTC sèche obtenue comprend de 5 % à 40 %, de préférence de 10 % à 30 %, en poids d'extrait sec de polymère et de 60 % à 95 %, de préférence de 70 % à 90 %, en poids d'extrait sec d'ATO par rapport au poids total de l'encre NTC sèche.

Après séchage, l'encre PTC sèche obtenue comprend de 5 % à 40 %, de préférence de 10 % à 30 %, en poids d'extrait sec de polymère et de 60 % à 95 %, de préférence 70 % à 90 %, en poids d'extrait sec de noir de carbone par rapport au poids total de l'encre PTC sèche.
(4) Une couche de passivation 44 est déposée (figure 5D). La couche 44 peut être une couche de passivation hydrophobe à base d'un polymère fluoré à faible constante diélectrique, par exemple de l'ordre de 2. A titre d'exemple, ce dépôt est fait par sérigraphie, par pulvérisation ou par jet d'encre. Il peut être suivi d'un recuit, par exemple à 100°C pendant 20 à 30 minutes.

L'ensemble comprenant les électrodes 38, les pistes résistives 40, 42 et la couche de passivation 44 forment le capteur de température 14 représenté en figure 1.

La couche de passivation 44 a deux rôles : la protection des dépôts sensibles, notamment les cordons de pâte résistive 40, 42, contre les courts-circuits avec les couches qui vont être déposées après. Le deuxième rôle de la couche de passivation 44 est d'avoir une capacité calorifique faible. A titre d'exemple, l'épaisseur de la couche 44 est comprise entre 100 nm et 5 µm.
(5) Un plot d'oxyde de cuivre (CuO) 46 est formé pour chaque pixel du détecteur (figure 5E). Chaque plot d'oxyde de cuivre 46 peut être déposé par sérigraphie ou par jet d'encre. L'épaisseur du plot 46 peut varier de 1 µm à 60 µm. L'étape de dépôt peut être suivie d'un recuit pour solidifier l'oxyde de cuivre, par exemple à 100°C pendant 20 à 30 minutes.

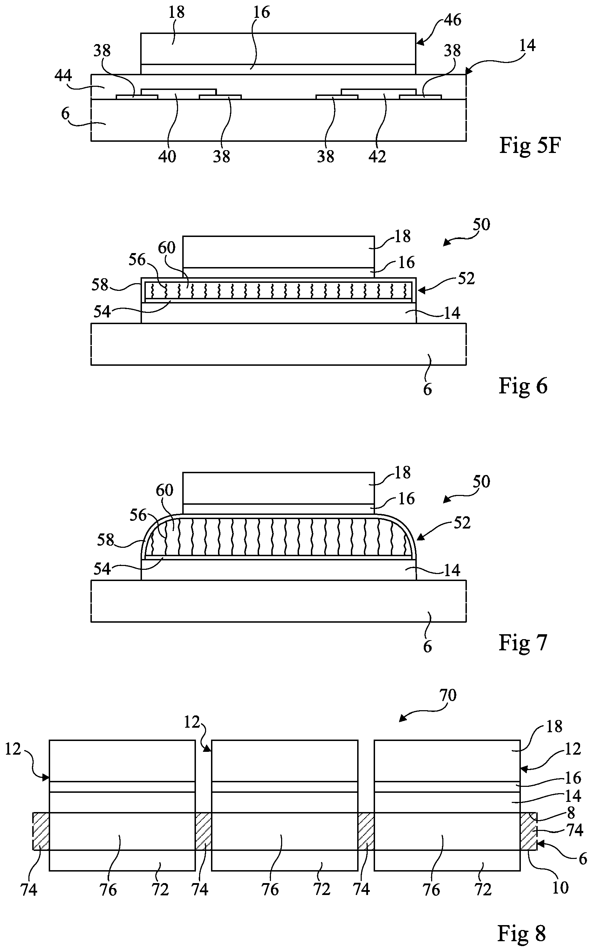

Un exemple d'encre susceptible d'être utilisée pour la formation des plots d'oxyde de cuivre correspond à l'encre commercialisée par la société Novacentrix sous l'appellation Metallon ICI-020.
(6) Un rayonnement ultraviolet à impulsions ultra-brèves, fourni par exemple par une lampe flash, est appliqué sur l'ensemble de la structure. Par rayonnement UV, on entend un rayonnement dont les longueurs d'onde sont, au moins en partie, comprises entre 200 nm et 400 nm. Le rayonnement ultraviolet à impulsions (UV flash) permet de déclencher une réaction chimique dans le plot d'oxyde de cuivre 46 qui entraîne la réduction de l'oxyde de cuivre en cuivre en partie supérieure de chaque plot 46. A la fin de l'application du rayonnement ultraviolet, le plot 46 comprend une portion supérieure en cuivre correspondant à la couche d'absorption 18 décrite précédemment et une portion inférieure en oxyde de cuivre, interposée entre la couche d'absorption 18 et la couche de passivation 44, et correspondant à la couche d'interface 16 décrite précédemment (figure 5F). L'épaisseur de la portion inférieure en oxyde de cuivre est commandée par les paramètres du recuit UV à impulsions, comme la durée de l'impulsion, la fluence et le nombre d'impulsions. A titre d'exemple, le rayonnement ultraviolet est appliqué avec des impulsions brèves, par exemple entre 500 µs et 3 ms, avec une fluence comprise entre 10 J/cm² et 30 J/cm². La durée totale du traitement peut dépendre de la durée de chaque impulsion et du nombre d'impulsions.

A l'étape (6), il est nécessaire que la totalité de l'oxyde de cuivre du plot 46 ne soit pas réduit en cuivre et qu'il reste la couche d'interface 16 entre la couche de passivation 44 et la couche de cuivre 18. En effet, l'adhésion directe du cuivre sur la couche de passivation 44 est généralement de mauvaise qualité. La couche d'interface 16 joue alors le rôle de couche d'accroche de la couche de cuivre 18. En outre, les propriétés d'isolation de la couche de passivation 44 peuvent être insuffisantes.

Selon un autre mode de réalisation, l'étape (4) peut ne pas être présente. Dans ce cas, la couche de CuO 16 repose directement sur les résistances 40, 42, les électrodes 38 et le substrat 6.

Un avantage du mode de réalisation du détecteur de rayons X décrit précédemment est qu'il peut être réalisé sur un substrat flexible qui peut donc être mis en forme selon les différentes applications envisagées.

Un autre avantage est que le procédé de fabrication du détecteur de rayons X peut ne mettre en oeuvre que des techniques d'impression. Le détecteur de rayons X peut donc être réalisé à bas coût.

Un autre avantage est que la couche d'interface 16 et la couche d'absorption 18 sont fabriquées en une seule étape du procédé.

Un autre avantage est que le procédé de fabrication décrit précédemment permet la fabrication d'un détecteur de rayons X de grandes dimensions, comprenant par exemple une matrice de plots d'absorption 18 comprenant un nombre important de plots d'absorption 18 et/ou comprenant des plots d'absorption de grandes dimensions. A titre d'exemple, chaque plot d'absorption 18 peut, vu depuis le haut en figure 1, être inscrit dans un carré dont le côté mesure entre 100 µm et 500 µm. A titre d'exemple, le détecteur 5 peut comprendre de 4 à 64 pixels.

Les figures 6 et 7 représentent un autre mode de réalisation d'un détecteur 50 de rayons X. Le détecteur 50 comprend l'ensemble des éléments du détecteur 5 représenté en figure 1 et comprend, en outre, un dispositif thermo-actionnable 52 interposé entre le capteur de température 14 et la couche d'interface 16. Le dispositif thermo-actionnable 52 comprend une couche d'accroche 54 reposant sur le capteur de température 16 et sur laquelle sont fixées des molécules 56 à changement d'état en fonction de la température, appelées par la suite molécules thermo-réactives. La nature de la couche d'accroche 54 dépend de la nature des molécules thermo-réactives 56. L'épaisseur de la couche d'accroche 54 peut être comprise entre 10 nm et 300 nm, par exemple d'environ 30 nm. La couche 54 peut être une couche métallique ou une couche non métallique, par exemple réalisée en fullerène ou en polystyrène.

On entend par molécule thermo-réactive une molécule de polymère qui montre un changement important et discontinu d'au moins une propriété physique en fonction de la température. Selon un mode de réalisation, les molécules thermo-réactives 56 ont une température caractéristique de transition et sont dans un premier état, c'est-à-dire avec une propriété physique à un premier niveau, lorsque la température est inférieure à la température caractéristique de transition et sont dans un deuxième état, c'est-à-dire avec une propriété physique à un deuxième niveau, lorsque la température est supérieure à la température caractéristique de transition. Ce changement est, de préférence, réversible de sorte que les molécules passent du premier état au deuxième état lorsque la température s'élève au-dessus de la température caractéristique de transition et passent du deuxième état au premier état lorsque la température diminue au-dessous de la température caractéristique de transition.

Selon un mode de réalisation, la propriété considérée est la conformation tridimensionnelle de la molécule. Selon un autre mode de réalisation, la propriété considérée est la solubilité de la molécule dans un solvant. Selon un autre mode de réalisation, la propriété considérée est l'hydrophobie de la molécule.

Selon un mode de réalisation, dans le premier état, les molécules thermo-réactives 56 peuvent avoir une affinité pour l'eau donnée, tandis que dans le deuxième état, les molécules thermo-réactives 56 peuvent avoir une affinité inverse pour l'eau. Par exemple, dans le premier état, les molécules thermo-réactives 56 peuvent être hydrophobes (inversement hydrophiles) alors que dans le deuxième état, les molécules thermo-réactives 56 peuvent être hydrophiles (inversement hydrophobes). Plus généralement, les molécules thermo-réactives 56 peuvent être telles qu'elles sont susceptibles de passer d'un caractère solvéophobe (inversement solvéophile) à un caractère solvéophile (inversement solvéophobe) à la suite d'une variation de température. A titre d'exemple, le matériau comprenant les molécules thermo-réactives 56 peut se présenter sous la forme d'un gel aqueux qui occupe un premier volume lorsque la température est au-dessous de la température caractéristique de transition et un deuxième volume, strictement supérieur au premier volume, lorsque la température est au-dessus de la température caractéristique de transition.

Avantageusement, les molécules thermo-réactives 56 peuvent être choisies parmi un ou plusieurs polymères suivants : poly(N-isopropylacrylamide) (polyNIPAM), polyvinylcaprolactame, hydroxypropylcellulose, polyoxazoline, polyvinylméthyléther, polyéthylèneglycol, poly-3-diméthyl(méthacryloyloxyéthyl) ammonium propane sulfonate (PDMAPS), et poly(propyl sulfonate dyméthyl ammonium éthylméthacrylate).

Les températures caractéristiques de transition de ces matériaux sont les suivantes :
polyNIPAM : entre 30 et 37 °C ;
polyvinylcaprolactame : 37 °C ;
hydroxypropylcellulose : entre 40 et 56 °C ;
polyoxazoline : 70 °C ;
polyvinylméthyléther : 45 °C ;
polyéthylèneglycol : entre 100 et 130 °C ;
PDMAPS : entre 32 et 35 °C ;
poly(propyl sulfonate dyméthyl ammonium éthyl méthacrylate) : 30°C.

Par exemple, dans le premier état, les molécules thermo-réactives 56 peuvent être hydrophobes (inversement hydrophiles) alors que dans le deuxième état, les molécules thermo-réactives 56 peuvent être hydrophiles (inversement hydrophobes).

Selon un mode de réalisation, les molécules thermo-réactives 56 peuvent être formées de plusieurs types de polymères thermo-activables, notamment avec des températures caractéristiques de transition respectives distinctes.

Il est possible de modifier la température caractéristique de transition du polymère thermo-réactif en rajoutant un sel ou en ajoutant un tensio-actif ou un solvant approprié au polymère. De la même manière, une modification de la température caractéristique de transition pour une famille de polymère thermo-réactif peut être réalisée par formation d'un copolymère, le copolymère portant au choix une charge ou un groupement amphiphile.

Le détecteur 50 comprend un capot 58 recouvrant les molécules thermo-réactives 56 et qui délimite, avec le capteur de température 14, une enceinte 60 contenant les molécules thermo-réactives 56. Le capot 58 est adapté pour pouvoir être déformé lors de l'application de contraintes mécaniques extérieures. Dans ce but, à titre d'exemple, l'épaisseur du capot 58 est comprise entre 1 µm et 2 µm, pour obtenir une membrane flexible.

De préférence, le capot 58 est en un matériau qui permet d'avoir un bon apport en humidité dans l'enceinte 60. A titre d'exemple, pour confiner l'eau ou l'humidité dans l'enceinte 60, il peut être prévu sur les parois internes de l'enceinte 60 une ou plusieurs zones présentant une bonne affinité avec l'eau comme par exemple du polyimide (PI) ou du polydiméthylsyloxane (PDMS). A titre d'exemple, le capot 58 est en un matériau choisi parmi le groupe comprenant le polyimide, le poly(méthyl méthacrylate) (PMMA), le poly(vinylcrotonate) et le PET. Le capot 58 peut comprendre des ouvertures pour permettre le passage de l'humidité.

Lorsque la température au niveau des molécules thermo-réactives 56 dépasse un seuil de température, ceci entraîne une augmentation du volume occupé par les molécules thermo-réactives 56 et une déformation du capot 58. A titre d'exemple, en figure 7, on a représenté le capot 58 avec une forme bombée vers l'extérieur due à l'augmentation du volume de l'enceinte 60. Toutefois, la forme déformée du capot 58 peut être différente de la forme représentée en figure 7. L'épaisseur mince du capot 58 permet de façon avantageuse d'obtenir une importante déformation du capot 58 lors du changement de volume de l'enceinte 60.

Le dispositif thermo-actionnable 52 permet de modifier la distance entre le capteur de température 14 et le plot d'absorption 18 en fonction de la température. En particulier, le dispositif thermo-actionnable 52 permet d'éloigner ou de rapprocher le capteur de température 14 du plot d'absorption 18 dans le cas d'une élévation trop importante de la température. Ceci permet avantageusement d'isoler électriquement le plot d'absorption 18 du capteur de température 14 et/ou d'améliorer le passage du flux thermique. L'échauffement du capteur de température lors de son fonctionnement peut, en outre, contribuer à l'actionnement du dispositif thermo-actionnable.

En outre, les molécules thermo-réactives 56 peuvent former un écran au moins en partie opaque au rayonnement ultraviolet. On obtient, de façon avantageuse, une protection des matériaux utilisés pour la réalisation des résistances NTC et PTC lors de l'exposition au rayonnement X à l'étape (6) décrite précédemment.

Selon un mode de réalisation d'un procédé de fabrication du dispositif thermo-réactif 52, la couche d'accroche 54 peut être déposée par dépôt physique en phase vapeur (PVD). Les molécules thermosensibles 56 peuvent être greffées sur la couche d'accroche 54 selon le procédé décrit dans la publication de A. Housni et Y. Zhao intitulée "Gold Nanoparticles Functionalized with Block Copolymers Displaying Either LCST or UCST Thermosensitivity in Aqueous Solution", Langmuir, 2010, 26 (15), pp 12933-12939. D'autres exemples de procédés de greffage sont décrits dans la demande de brevet français FR13/54701 dont le contenu est considéré comme connu. Le capot 58 peut être réalisé par des techniques d'impression, par exemple par impression par jet d'encre, ou par pulvérisation. Une étape de recuit permettant d'évaporer les solvants dans lequel sont dissous les polymères peut être prévue pour former un film. L'étape de recuit peut être réalisée par une irradiation par une succession d'impulsions de rayonnement ultraviolet (UV), ou flashs UV. Selon un mode de réalisation, la durée d'une impulsion UV est comprise entre 500 µs et 3 ms. La durée entre deux impulsions UV successives peut être comprise entre 1 et 5 secondes. La fluence du rayonnement UV peut être comprise entre 10 J/cm² et 30 J/cm².

La figure 8 représente un autre mode de réalisation de détecteur 70 de rayons X. Le détecteur 70 comprend l'ensemble des éléments du détecteur 5 représenté en figure 1. On a représenté, à titre d'exemple, en figure 8, trois détecteurs élémentaires adjacents 12. Le détecteur 70 comprend, en outre, pour chaque détecteur élémentaire 12, un capteur de température supplémentaire 72 situé sur la face 10 du substrat 6 opposée à la face 8 sur laquelle sont formés les détecteurs élémentaires 12. Selon un mode de réalisation, chaque capteur de température 72 est situé sensiblement en vis-à-vis du capteur de température 14 du détecteur élémentaire associé. Selon un mode de réalisation, le capteur de température 72 peut avoir la même structure que le capteur de température 14.

Selon un mode de réalisation, le substrat 6 a une épaisseur comprise entre 10 µm et 300 µm et préférentiellement entre 5 µm et 20 µm. Ceci permet avantageusement d'améliorer le transfert thermique au travers du substrat 6. Les capteurs de température 14 et 72 permettent de réaliser une mesure différentielle de température, c'est-à-dire de mesurer la différence entre la température au niveau du capteur de température 14 et la température au niveau du capteur de température 72.

On entend par matériau cristallin un matériau monocristallin, c'est-à-dire formé d'un seul cristal homogène, d'un seul tenant et sans joint de grain, ou un matériau polycristallin, c'est-à-dire comprenant plusieurs cristaux. De plus, on entend par matériau semi-cristallin un matériau comprenant des zones cristallines et des zones amorphes avec un taux de cristallinité supérieur à 10 %, de préférence supérieur à 20 %.

Il peut être souhaitable de réduire, de préférence d'empêcher, la diffusion latérale de la chaleur dans le substrat 6 pour éviter que la chaleur issue d'un plot d'absorption d'un détecteur élémentaire particulier 12 ne soit détectée par un capteur de température d'un autre détecteur élémentaire. Dans ce but, selon un mode de réalisation, des murs 74 plus isolants thermiquement que le film 6 à son état naturel peuvent être prévus dans le film 6 pour délimiter, pour chaque détecteur élémentaire 12, une portion 76 du film 6 entre les capteurs de température 14, 72. Chaque mur 74 peut avoir une largeur de l'ordre de 70 µm à 200 µm, une largeur de 100 µm étant généralement suffisante.

En figure 8, chaque mur 74 a été illustré comme traversant complètement le film 6. La pénétration du mur 74 dans le film 6 peut n'être que partielle.

Selon un mode de réalisation, le substrat 6 est un film en un matériau cristallin, par exemple en PEN ou PET. Chaque mur 74 peut être formé en rendant amorphe (en amorphisant) la zone du film correspondant au mur 74. Pour cela, la zone correspondant au mur est chauffée au-dessus de la température de transition vitreuse du film souple. Pour un film souple en PEN, la température de transition vitreuse est de l'ordre de 120°C et pour un film souple en PET, la température de transition vitreuse est de l'ordre de 60°C.

L'étape de chauffage peut être effectuée en utilisant un laser à excimère avec une puissance de l'ordre de 100 watts ou une brève impulsion d'ultraviolet (flash ultraviolet d'une durée de quelques microsecondes à quelques millisecondes, notamment de 0,5 à 1,5 ms) à l'aide de l'équipement commercialisé sous l'appellation PulseForge par la société Novacentrix ou sous l'appellation Sinteron 2000 par la société Xénon Corporation. Le chauffage peut être réalisé en une seule fois avec un laser excimère mais peut devoir être répété dans le cas où l'on utilise des flashs ultraviolets. Par ces divers moyens, on amène très brièvement la température des zones à amorphiser dans le substrat PEN, PET à une température de l'ordre de 260°C, puis ces zones sont refroidies rapidement afin de les rendre amorphes.

Grâce à la présence du mur 74, la chaleur produite dans un plot d'absorption 18 se propage vers le capteur de température 14 puis, en traversant le substrat 6, vers le capteur de température 72 sans affecter des détecteurs élémentaires voisins.

Des modes de réalisation particuliers ont été décrits. Diverses variantes et modifications apparaîtront à l'homme de l'art. En particulier, bien que dans les modes de réalisation décrits précédemment, le détecteur élémentaire 12 comprenne au moins un capteur de température 14 du même côté du substrat 6 que le plot d'absorption 18, il est clair que le détecteur élémentaire peut comprendre seulement un capteur de température situé du côté du substrat opposé au plot d'absorption 18. La couche d'interface 16 peut alors reposer directement sur le substrat 6.

En outre, divers modes de réalisation avec diverses variantes ont été décrits ci-dessus. On notera que l'homme de l'art pourra combiner divers éléments de ces divers modes de réalisation et variantes sans faire preuve d'activité inventive. A titre d'exemple, les murs 74 décrits en relation avec la figure 8 peuvent être mis en oeuvre avec les modes de réalisation de détecteurs décrits précédemment en relation avec les figures 1 et 6.

## Revendications

1. Détecteur (5 ; 50 ; 70) de rayons X, comprenant un substrat (6) comprenant des première et deuxième faces opposées (8, 10), au moins un premier capteur de température (14, 72) du côté de la première ou de la deuxième face, **caractérisé en ce qu'**il comprend, en outre, au moins un empilement (15) d'une couche d'oxyde de cuivre (16) et d'une couche de cuivre (18), la couche d'oxyde de cuivre étant située entre la couche de cuivre et le substrat, l'empilement recouvrant au moins en partie le premier capteur de température ou étant au moins partiellement en vis-à-vis du premier capteur de température.

2. Détecteur selon la revendication 1, dans lequel l'épaisseur de la couche de cuivre (18) est comprise entre 5 µm et 60 µm.

3. Détecteur selon la revendication 1 ou 2, dans lequel l'épaisseur de la couche d'oxyde de cuivre (16) est comprise entre 100 nm et 1 µm.

4. Détecteur selon l'une quelconque des revendications 1 à 3, dans lequel le premier capteur de température (14) repose sur la première face (8) et dans lequel la couche d'oxyde de cuivre (16) recouvre le premier capteur de température.

5. Détecteur selon la revendication 4, comprenant, en outre, un deuxième capteur de température (72) reposant sur la deuxième face (10) et au moins partiellement en vis-à-vis du premier capteur de température.

6. Détecteur selon l'une quelconque des revendications 1 à 5, comprenant une enceinte (58) déformable, entre l'empilement (15) et le premier capteur de température (14), l'enceinte contenant des molécules thermo-réactives (56) adaptées à déformer l'enceinte lorsque la température dépasse une température seuil.

7. Détecteur selon l'une quelconque des revendications 1 à 6, dans lequel le substrat (6) comprend un film souple d'un matériau cristallin ou semi-cristallin comprenant une zone (76) recouverte au moins partiellement par le premier capteur de température (14), et entourée d'un mur amorphisé (74).

8. Procédé de fabrication d'un détecteur (5 ; 50 ; 70) de rayons X selon l'une quelconque des revendications 1 à 7, comprenant les étapes suivantes :
prévoir un substrat (6) comprenant des première et deuxième faces opposées (8, 10) ; et
former au moins un premier capteur de température (14, 72) du côté de la première ou deuxième face,
**caractérisé en ce qu'**il comprend, en outre, les étapes suivantes :
déposer un plot en oxyde de cuivre (46) recouvrant au moins en partie le premier capteur de température ou étant au moins partiellement en vis-à-vis du premier capteur de température ; et
irradier le plot d'oxyde de cuivre par un rayonnement ultraviolet de façon à former, dans le plot, un empilement (15) d'une couche d'oxyde de cuivre (16) et d'une couche de cuivre (18), la couche d'oxyde de cuivre étant située entre la couche de cuivre et le substrat.

9. Procédé selon la revendication 8, dans lequel le rayonnement ultraviolet est appliqué par impulsions, chaque impulsion ayant une durée comprise entre 500 µs et 3 ms, avec une fluence comprise entre 10 J/cm² et 30 J/cm².

10. Procédé selon la revendication 8 ou 9, dans lequel le premier capteur de température (14 ; 72) est formé par des techniques d'impression.

## Patentansprüche

1. Ein Röntgendetektor (5; 50; 70), der ein Substrat (6) mit ersten und zweiten gegenüberliegenden Oberflächen (8, 10) aufweist, mindestens einen ersten Temperatursensor (14, 72) an der Seite der ersten oder der zweiten Oberfläche, **dadurch gekennzeichnet, dass** er ferner mindestens einen Stapel (15) aus einer Kupferoxidschicht (16) und aus einer Kupferschicht (18) aufweist, wobei die Kupferoxidschicht zwischen der Kupferschicht und dem Substrat angeordnet ist, und wobei der Stapel mindestens teilweise den ersten Temperatursensor abdeckt oder mindestens teilweise gegenüber dem ersten Temperatursensor liegt.

2. Detektor nach Anspruch 1, wobei die Dicke der Kupferschicht (18) in dem Bereich von 5 µm bis 60 µm liegt.

3. Detektor nach Anspruch 1 oder 2, wobei die Dicke der Kupferoxidschicht (16) in dem Bereich von 100 nm bis 1 µm liegt.

4. Detektor nach einem der Ansprüche 1 bis 3, wobei der erste Temperatursensor (14) an der ersten Oberfläche (8) anliegt und wobei die Kupferoxidschicht (16) den ersten Temperatursensor abdeckt.

5. Detektor nach Anspruch 4, der ferner einen zweiten Temperatursensor (72) aufweist, der an der zweiten Oberfläche (10) anliegt und mindestens teilweise gegenüber dem ersten Temperatursensor liegt.

6. Detektor nach einem der Ansprüche 1 bis 5, der eine deformierbare Umfassung (58) zwischen dem Stapel (15) und dem ersten Temperatursensor (14) aufweist, wobei die Umfassung wärmesensitive Moleküle (56) aufweist, die geeignet sind, die Umfassung zu deformieren, wenn die Temperatur über eine Schwellenwerttemperatur hinausgeht.

7. Detektor nach einem der Ansprüche 1 bis 6, wobei das Substrat (6) einen flexiblen Film aus einem kristallinen oder semikristallinen Material mit einem Bereich (76) aufweist, der mindestens teilweise durch den ersten Temperatursensor (14) abgedeckt ist und mit einer amorphen Wand (74) umgeben ist.

8. Verfahren zur Herstellung des Röntgendetektors (5; 50; 70) nach einem der Ansprüche 1 bis 7, das die folgenden Schritte aufweist:
Vorsehen eines Substrats (6), das erste und zweite gegenüberliegende Seiten (8, 10) aufweist; und
Bilden von mindestens einem ersten Temperatursensor (14, 72) an der ersten oder zweiten Oberflächenseite,
**dadurch gekennzeichnet, dass** es ferner die folgenden Schritte aufweist:
Abscheiden einer Kupferoxidlage (46), die mindestens teilweise den ersten Temperatursensor abdeckt oder mindestens teilweise gegenüber dem ersten Temperatursensor liegt; und
Bestrahlen der Kupferoxidlage mit einer ultravioletten Strahlung, um in der Lage einen Stapel (15) aus einer Kupferoxidschicht (16) und einer Kupferschicht (18) zu bilden, wobei die Kupferoxidschicht zwischen der Kupferschicht und dem Substrat angeordnet ist.

9. Verfahren nach Anspruch 8, wobei die ultraviolette Strahlung in Impulsen angelegt wird, wobei jeder Impuls eine Dauer in dem Bereich von 500 µs bis 3 ms besitzt mit einer Fluenz in dem Bereich von 10 J/cm² bis 30 J/cm².

10. Verfahren nach Anspruch 8 oder 9, wobei der erste Temperatursensor (14; 72) durch Drucktechniken gebildet wird.

## Claims

1. An X-ray detector (5; 50; 70), comprising a substrate (6) comprising first and second opposite surfaces (8, 10), at least one first temperature sensor (14, 72) on the side of the first or of the second surface, **characterized in that** it further comprises at least one stack (15) of a copper oxide layer (16) and of a copper layer (18), the copper oxide layer being located between the copper layer and the substrate, the stack at least partly covering the first temperature sensor or being at least partially opposite the first temperature sensor.

2. The detector of claim 1, wherein the thickness of the copper layer (18) is in the range from 5 µm to 60 µm.

3. The detector of claim 1 or 2, wherein the thickness of the copper oxide layer (16) is in the range from 100 nm to 1 µm.

4. The detector of any of claims 1 to 3, wherein the first temperature sensor (14) rests on the first surface (8) and wherein the copper oxide layer (16) covers the first temperature sensor.

5. The detector of claim 4, further comprising a second temperature sensor (72) resting on the second surface (10) and at least partially opposite the first temperature sensor.

6. The detector of any of claims 1 to 5, comprising a deformable enclosure (58) between the stack (15) and the first temperature sensor (14), the enclosure containing heat-sensitive molecules (56) capable of deforming the enclosure when the temperature exceeds a threshold temperature.

7. The detector of any of claims 1 to 6, wherein the substrate (6) comprises a flexible film of a crystalline or semicrystalline material comprising an area (76) at least partially covered with the first temperature sensor (14), and surrounded with an amorphized wall (74).

8. A method of manufacturing the X-ray detector (5; 50; 70) of any of claims 1 to 7, comprising the steps of:
providing a substrate (6) comprising first and second opposite surfaces (8, 10); and
forming at least one first temperature sensor (14, 72) on the first or second surface side,
**characterized in that** it further comprises the steps of:
depositing a copper oxide pad (46) at least partly covering the first temperature sensor or being at least partially opposite the first temperature sensor; and
irradiating the copper oxide pad with an ultraviolet radiation to form, in the pad, a stack (15) of a copper oxide layer (16) and of a copper layer (18), the copper oxide layer being located between the copper layer and the substrate.

9. The method of claim 8, wherein the ultraviolet radiation is applied in pulses, each pulse having a duration in the range from 500 µs to 3 ms, with a fluence in the range from 10 J/cm² to 30 J/cm².

10. The method of claim 8 or 9, wherein the first temperature sensor (14; 72) is formed by printing techniques.
